(19) Europäisches Patentamt
European Patent Office
Office européen des brevets

(11) **EP 2 615 191 B1**

(12) **EUROPEAN PATENT SPECIFICATION**

(45) Date of publication and mention
of the grant of the patent:
**13.04.2016 Bulletin 2016/15**

(51) Int Cl.:
*C22C 38/00* (2006.01)      *C21D 9/46* (2006.01)
*C22C 38/14* (2006.01)

(21) Application number: **11823683.5**

(22) Date of filing: **05.09.2011**

(86) International application number:
**PCT/JP2011/070665**

(87) International publication number:
**WO 2012/033210 (15.03.2012 Gazette 2012/11)**

(54) **HIGH-STRENGTH COLD-ROLLED STEEL SHEET HAVING EXCELLENT STRETCH FLANGE PROPERTIES, AND PROCESS FOR PRODUCTION THEREOF**

HOCHFESTES KALTGEWALZTES STAHLBLECH MIT AUSGEZEICHNETEN DEHNUNGS- UND BÖRDELUNGSEIGENSCHAFTEN SOWIE HERSTELLUNGSVERFAHREN DAFÜR

FEUILLE D'ACIER LAMINÉ À FROID À HAUTE RÉSISTANCE AYANT D'EXCELLENTES PROPRIÉTÉS DE DÉFORMABILITÉ DE BORDAGE PAR ÉTIRAGE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.08.2011 JP 2011179329**
**06.09.2010 JP 2010199040**

(43) Date of publication of application:
**17.07.2013 Bulletin 2013/29**

(73) Proprietor: **JFE Steel Corporation**
**Tokyo 100-0011 (JP)**

(72) Inventors:
• **KAWABE, Hidetaka**
**Tokyo 100-0011 (JP)**
• **NISHIZAWA, Masanori**
**Tokyo 100-0011 (JP)**
• **SETO, Kazuhiro**
**Tokyo 100-0011 (JP)**

(74) Representative: **Hoffmann Eitle**
**Patent- und Rechtsanwälte PartmbB**
**Arabellastraße 30**
**81925 München (DE)**

(56) References cited:
**EP-A1- 1 354 972      EP-A1- 2 157 203**
**JP-A- 2005 281 854      JP-A- 2008 056 993**
**JP-A- 2009 030 159      JP-A- 2010 126 747**

• **BLECK W ET AL: "Microalloying of cold-formable multi phase steel grades", MATERIALS SCIENCE FORUM, TRANS TECH PUBLICATIONS LTD-SWITZERLAND, CH, vol. 500-501, 1 November 2005 (2005-11-01), pages 97-112, XP009116657, ISSN: 0255-5476**

EP 2 615 191 B1

**Description**

[Technical Field]

The present invention relates to a high strength cold rolled steel sheet suitable for use as automobile parts and the like, which are press-formed into complicated shapes. In particular, the present invention relates to an improvement in stretch flangeability. Here, a term "high strength steel sheet" refers to a steel sheet having high strength of a tensile strength: 590 MPa or more. In addition, a term "steel sheet" here includes a steel sheet and a steel sheet in coil.

[Background Art]

In recent years, an improvement in automobile fuel efficiency has been required from the viewpoint of global environmental conservation, and weight reduction in automobile body has been pursued. Meanwhile, an improvement in crashworthy of the automobiles has been required from the viewpoint of ensuring the safety of occupants. In consideration of such requirements, application of the high strength steel sheet to automobile bodies has been enlarged.

However, as the strength of a steel sheet used increases, the press formability is degraded. In particular, the stretch flangeability tends to be degraded significantly. Consequently, a high strength steel sheet having excellent press formability, especially stretch flangeability, has been required.

In response to such requirements, for example, Patent Literature 1 describes "a method for manufacturing a high strength cold rolled steel sheet having excellent stretch flangeability". The technology described in Patent Literature 1 is a method for manufacturing a high strength cold rolled steel sheet having excellent stretch flangeability, wherein a steel sheet containing C: 0.04% or more and less than 0.20%, Si: 1.50% or less, Mn: 0.50% to 2.00%, P: 0.10% or less, S: 0.005% or less, Cr: 2.00% or less, and the remainder composed of Fe and incidental impurities or further containing at least one type of Ca, Ti, Nb, REM, and Ni besides them is cold rolled, annealing is performed in a two-phase region, cooling is performed in such a way as to stay at temperatures between 650°C and a temperature T, at which pearlite transformation terminates, for 10 seconds or more, and cooling is performed in such a way that the residence time in T to 450°C is specified to be 5 seconds or less. It is cited that the technology described in Patent Literature 1 can produce a steel sheet having excellent stretch flangeability by suppressing occurrences of irregular microstructures.

Meanwhile, Patent Literature 2 describes "a multi phase steel sheet having excellent elongation and stretch flangeability". The steel sheet described in Patent Literature 2 has a composition containing C: 0.02% to 0.12%, Si + Al: 0.5% to 2.0%, and Mn: 1.0% to 2.0% on a percent by mass basis and a multi phase in which polygonal ferrite is 80% or more, retained austenite is 1% to 7%, and the remainder is composed of bainite and/or martensite on a microstructure space factor basis, a second phase microstructure is composed of martensite and retained austenite, and 15 or less of massive second phase microstructures having an aspect ratio of 1:3 or less and an average grain size of 0.5 $\mu$m or more are present in 750 $\mu$m$^2$. It is cited that according to the technology described in Patent Literature 2, the elongation and the stretch flangeability at room temperature are improved by morphologic control of the second phase microstructure.

However, according to the technology described in Patent Literature 1, a large amount of Cr which adversely affects the chemical conversion treatability is contained incidentally and the C content is high. Therefore, problems remain in the chemical conversion treatability and the spot weldability. In addition, according to the technology described in Patent Literature 2, large amounts of Si and Al which degrade the chemical conversion treatability and the spot weldability are contained and there are problems in that the chemical conversion treatability and the spot weldability are poor.

Meanwhile, Patent Literature 3 describes "a method for manufacturing a high strength steel sheet having excellent elongation and stretch flangeability". The technology described in Patent Literature 3 is a method for manufacturing a high strength steel sheet having a tensile strength of 590 MPa or more and excellent elongation and stretch flangeability, the method characterized in that a steel sheet which has a composition containing C: 0.05% to 0.3%, Si: 0.01% to 3%, Mn: 0.5% to 3.0%, and Al: 0.01% to 0.1% and containing 0.01% to 1% in total of at least one selected from Ti, Nb, V, and Zr and in which the space factor of martensite and/or bainite is 90% or more in total and the prior austenite grain size is 20 $\mu$m or less in terms of equivalent circle diameter is employed as a raw material steel sheet, and after the steel sheet is heated and maintained within a temperature range of (Ac$_3$ point - 100°C) to Ac$_3$ point for 1 to 2,400 seconds, the steel sheet is cooled to Ms point or lower at an average cooling rate of 10°C/sec or more and, then, is heated and maintained again in a temperature range of 300°C to 550°C for 60 to 1,200 seconds. According to the technology described in Patent Literature 3, a steel sheet can be produced having a microstructure in which 5% to 30% of ferrite phase and 50% to 95% of martensitic phase are included, the average grain size of the ferrite phase is 3 $\mu$m or less in terms of equivalent circle diameter, and the average grain size of the martensitic phase is 6 micrometers or less in terms of equivalent circle diameter. It is cited that the elongation and the stretch flangeability are improved by controlling the space factors and the average grain sizes of the ferrite phase and the martensitic phase appropriately.

However, according to the technology described in Patent Literature 3, a large amount of Si is contained, the C content is high, and there are problems in that the chemical conversion treatability and the spot weldability are poor. In addition, the technology described in Patent Literature 3 requires a temperature raising and reheating step after cooling, so that a production cost may increase.

As described above, in many cases, an increase in strength of a steel sheet is accompanied with addition of large amounts of alloy elements, e.g., C and Si, and is accompanied with degradation in press formability together with degradation in chemical conversion treatability and spot weldability in such cases. Consequently, in order to improve the press formability, e.g., the stretch flangeability and, in addition, ensure the chemical conversion treatability and the spot weldability, which are required of an automobile body, it has also been especially demanded that the amount of C and the amount of Si are adjusted within an appropriate range.

In response to such requirements, for example, Patent Literature 4 describes "a method for manufacturing a high strength cold rolled steel sheet having excellent chemical conversion treatability and stretch flangeability". The technology described in Patent Literature 4 is a method for manufacturing a high strength cold rolled steel sheet, wherein a steel slab in which the composition of a surface layer portion is specified to be different from the composition of the inside other than that is subjected to hot rolling and, thereafter, cold rolling, heating to 800°C or higher in a continuous annealing line, cooling to 350°C to 500°C at a cooling rate of 30°C/sec or more, and maintaining within that temperature range for 40 seconds or more. The component of the surface layer portion contains C: 0.20% or less, Si: 0.04% or less, Mn: 0.1% to 3.0%, P: 0.025% or less, S: 0.005% or less, Al: 0.01% to 0.1%, and the remainder composed of Fe and incidental impurities or further contains at least one type of Ca, REM, and Zr besides them. The component of the inside other than that contains C: 0.04% to 0.20%, Si: 0.5% to 2.0%, Mn: 0.5% to 3.0%, P: 0.025% or less, S: 0.005% or less, Al: 0.01% to 0.1%, and the remainder composed of Fe and incidental impurities, where Si and Mn satisfy a specific relational expression, or further contains at least one type of Ca, REM, and Zr besides them.

Meanwhile, Patent Literature 5 describes "a method for manufacturing a high strength steel sheet having excellent workability". The technology described in Patent Literature 5 is a method for manufacturing a high strength steel sheet, in which a high strength steel sheet is obtained by subjecting a cold rolled steel sheet having a composition containing C: 0.03% to 0.13%, Si: 0.02% to 0.8%, Mn: 1.0% to 2.5%, Al: 0.01% to 0.1%, N: 0.01% or less, Ti: 0.004% to 0.1%, and/or Nb: 0.004% to 0.07% to an annealing step including heating to a temperature range higher than or equal to the Ac3 transformation temperature at an average temperature raising rate of 5°C/s or more, maintaining that temperature range for 10 to 300 seconds and, thereafter, cooling from that temperature to a temperature range of 400°C to 600°C at an average cooling rate of 2°C/s or more, maintaining that temperature range for within a range of 40 to 400 seconds, followed by cooling. According to the technology described in Patent Literature 5, a 590 to 780 MPa-class high strength steel sheet is obtained having a microstructure in which the area percentages are ferrite: 50% to 86%, bainite: 10% to 30%, and martensite: 4% to 20%, the bainite area ratio is larger than the martensite area ratio, furthermore the average grain size of ferrite serving as a base material is 2.0 to 5.0 $\mu$m, and bainite and martensite serve as a second phase, exhibiting excellent TS-El balance and TS-$\lambda$ balance, and having excellent workability.

Meanwhile, Patent Literature 6 describes "a method for manufacturing a high strength cold rolled steel sheet exhibiting excellent balance between elongation and stretch flangeability". In the technology described in Patent Literature 6, a steel containing C: 0.05% to 0.30%, Si: 3.0% or less, Mn: 0.1% to 5.0%, and Al: 0.001% to 0.10% and containing at least one type of Nb: 0.02% to 0.40%, Ti: 0.01% to 0.20%, and V: 0.01% to 0.20% in such a way that (Nb/96 + Ti/51 + V/48) $\times$ 48 satisfies 0.01% to 0.20% is subjected to hot rolling in which a finishing delivery temperature: 900°C or higher, a cooling time to 550°C: (finishing delivery temperature - 550°C)/20 s or less, and a coiling temperature: 500°C or lower are specified and, thereafter, annealing in which cold rolling is performed at rolling reduction of cold rolling: 20% to 80%, heating is performed to a temperature in the range of (8 $\times$ Ac1 + 2 $\times$ Ac3)/10 to 1,000°C at a temperature raising rate satisfying a specific relationship in a temperature range of 600°C to Ac1, that temperature is maintained for 3,600 seconds or less and, then, cooling to a temperature lower than or equal to Ms point is performed at a cooling rate of 50°C/sec or more or slow cooling to a temperature of 600°C is performed and, thereafter, cooling to a temperature lower than or equal to Ms point is performed at a cooling rate of 50°C/sec or more, further followed by tempering. It is cited that, in this manner, a high strength cold rolled steel sheet is obtained having a microstructure containing 10% to 80% of ferrite as a mild phase on an area ratio basis, and further containing less than 5% of retained austenite, martensite, and a mixed microstructure thereof on an area ratio basis and the remainder hard phase composed of tempered martensite and/or tempered bainite, exhibiting excellent balance between elongation and stretch flangeability, and having a tensile strength of 780 MP or more, where in the microstructure, the amount of strain in ferrite is minimized and the deformability of the hard phase can be enhanced.

Meanwhile, Patent Literature 7 describes "a method for manufacturing a cold rolled steel sheet" having good elongation and bendability in spite of having a high tensile strength of 780 MPa or more and a large sheet thickness of 2.0 mm or more. The technology described in Patent Literature 7 is a method for manufacturing a cold rolled steel sheet, in which a hot rolled steel sheet having a composition containing C: 0.08% to 0.20%, Si: 1.0% or less, Mn: 1.8% to 3.0%, sol. Al: 0.005% to 0.5%, N: 0.01% or less, and Ti: 0.02% to 0.2% is subjected to cold rolling at a reduction rate of 30% to 60% so as to become a cold rolled steel sheet, and the resulting cold rolled steel sheet is allowed to stay in a temperature range of Ac3 to (Ac3 + 50°C) for 240 seconds or less, is cooled to a temperature range of 680°C to 750°C at an average cooling rate of 1°C to 10°C/sec, and is further cooled to 400°C or lower at an average cooling rate of 20°C to 50°C/sec. It is cited that, in this manner, a cold rolled steel sheet is produced having a microstructure which contains 10% or more of ferrite, 20% to 70% of bainite, 3% to 20% of retained austenite, and 0% to 20% of martensite on a volume fraction basis and in which the average grain size of ferrite is 10 $\mu$m or less, the average grain size of bainite is 10 $\mu$m or less, and the average grain size of martensite is 3 $\mu$m or less and having excellent bendability, that is, TS $\times$ El is 14,000 MPa·% or more and a minimum bending radius of 1.5t or less, in spite of having a high tensile strength TS of 780 MPa or more and a large sheet thickness of 2.0 mm or more.

[Citation List]

[Patent Literature]

[PTL 1] Japanese Unexamined Patent Application Publication No. 09-41040
[PTL 2] Japanese Unexamined Patent Application Publication No. 2006-176807
[PTL 3] Japanese Unexamined Patent Application Publication No. 2008-297609
[PTL 4] Japanese Unexamined Patent Application Publication No. 05-78752
[PTL 5] Japanese Unexamined Patent Application Publication No. 2010-65316
[PTL 6] Japanese Unexamined Patent Application Publication No. 2010-255091
[PTL 7] Japanese Unexamined Patent Application Publication No. 2010-59452

[Summary of Invention]

[Technical Problem]

However, according to the technology described in Patent Literature 4, use of a steel slab in which the composition of the surface layer portion is different from the composition of the inside other than that is required. In order to produce such a steel slab, it is necessary to put a special clad technology and the like to full use and, therefore, there is a problem in that an increase in production cost is induced.
Meanwhile, the technology described in Patent Literature 5 has a remaining problem in that the excellent bending characteristic cannot be ensured stably because the bainite fraction is small. In addition, there is also a problem in that the stability of microstructure is poor because the temperature raising rate in annealing is large.
Meanwhile, the technology described in Patent Literature 6 has a remaining problem in chemical conversion treatability and weldability because a steel sheet having a composition in which the Si content is high is directed and the C content is high. Furthermore, the technology described in Patent Literature 6 requires a temperature raising and reheating step, so that a production process becomes complicated and a production cost may increase.
Meanwhile, the technology described in Patent Literature 7 has a problem in that the weldability is degraded because C, Mn, and Ti contents are high. In addition, the Mn content is high, so that a Mn band which adversely affects the stretch flangeability remains. Furthermore, spheroidization of inclusions is insufficient. Therefore, a problem remains in that the stretch flangeability is degraded.
It is an object of the present invention to solve the above-described problems in the related art advantageously and provide a high strength cold rolled steel sheet having excellent stretch flangeability and a method for manufacturing the same without using a special clad technology and containing large amounts of alloy elements, e.g., C and Si. It is an object of the present invention to improve the stretch flangeability of a component system which does not contain Si and Cr adversely affecting the chemical conversion treatability, which does not contain large amounts of C, Si, and Al adversely affecting the spot weldability, and which does not contain expensive alloy elements, e.g., Ni, Cu, and Mo, while high strength of tensile strength: 590 MPa or more is maintained.
In this regard, the term "having excellent stretch flangeability" refers to the case where a product of tensile strength TS and elongation El, that is, strength-elongation balance TS $\times$ El, of 16,000 MPa% or more and a product of tensile strength TS and hole expansion ratio $\lambda$, that is, strength-hole expansion ratio balance TS $\times$ $\lambda$ of 40,000 MPa% or more are satisfied.

[Solution to Problem]

In order to achieve the above-described objects, the present inventors performed intensive research on the influences of a metal microstructure exerted on the stretch flangeability. As a result, it was found that a cold rolled steel sheet having excellent stretch flangeability was able to be produced while high strength of tensile strength: 590 MPa or more was maintained even when the component system had low contents of alloy elements, e.g., C and Si, by devising the heating and cooling conditions in annealing of a cold rolled sheet and adjusting the microstructure fractions of ferrite, bainite, martensite, and retained austenite precisely. It was found to be especially important that, in annealing of the cold rolled sheet, heating was specified to be two-step heating and cooling was specified to be two-step cooling, and in particular, the latter cooling was slow cooling as compared with the former cooling and the time of the latter cooling was specified to be 0.2 to 0.8 times the total cooling time in order to ensure a microstructure having predetermined microstructure fractions.

The present invention has been completed on the basis of the above-described findings and additional studies. That is, the gist of the present invention is as described below.

(1) A high strength cold rolled steel sheet having excellent stretch flangeability, comprising:

a composition containing C: 0.050% to 0.090%, Si: 0.05% or less, Mn: 1.5% to 2.0%, P: 0.030% or less, S: 0.0050% or less, Al: 0.005% to 0.1%, N: 0.01% or less, Ti: 0.005% to 0.050%, Nb: 0.020% to 0.080%, and optionally further containing Ca: 0.0001% to 0.0050%. and the balance being Fe and incidental impurities, on a percent by mass basis, and a microstructure consisting of 50% to 77% of ferrite phase, more than 30% and 50% or less of bainite phase, 2% to 10% of martensitic phase, 1% to 5% of retained austenite phase and optionally less than 3% of cementite phase.

(2) A method for manufacturing a high strength cold rolled steel sheet having excellent stretch flangeability, the method comprising: subjecting a steel to a hot rolling step, a cold rolling step, and an annealing step sequentially, so as to produce a cold rolled steel sheet,

wherein
the steel is specified to be a steel having a composition containing C: 0.050% to 0.090%, Si: 0.05% or less, Mn: 1.5% to 2.0%, P: 0.030% or less, S: 0.0050% or less, Al: 0.005% to 0.1%, N: 0.01% or less, Ti: 0.005% to 0.050%, Nb: 0.020% to 0.080%, and optionally further containing Ca: 0.0001 % to 0.0050%, and the balance being Fe and incidental impurities, on a percent by mass basis,
the annealing step is specified to be a step having a maximum achieving temperature: 800°C to 900°C, two-step heating, and two-step cooling, the two-step heating includes first-step heating to heat from 50°C to a first-step heating achieving temperature in a temperature range of (maximum achieving temperature - 50°C) to (maximum achieving temperature - 10°C) at an average temperature raising rate: 0.5°C to 5.0°C/s and second-step heating, in which the temperature raising time from that temperature range to the maximum achieving temperature is specified to be 30 to 150 s,
the two-step cooling includes first-step cooling to cool from the above-described maximum achieving temperature at a first-step cooling rate of an average cooling rate: 10°C to 40°C/s, and the following second-step cooling to cool to a cooling stop temperature in a temperature range of 400°C to 500°C at a cooling rate of an average cooling rate: (0.2 to 0.8) × first-step cooling rate for a cooling time of 0.2 to 0.8 times the total cooling time of the first-step cooling and the second-step cooling, and
after the second-step cooling is finished, staying is performed in a temperature range of 400°C to 500°C for 100 to 1,000 s.

[Advantageous Effects of Invention]

According to the present invention, a high strength cold rolled steel sheet having high strength of tensile strength TS: 590 MPa or more and excellent stretch flangeability, which satisfies strength-elongation balance TS × El of 16,000 MPa% or more and strength-hole expansion ratio balance TS × λ of 40,000 MPa% or more, and being suitable for automobile parts which are press-formed into complicated shapes can be produced stably and inexpensively. Therefore, significant effects are exerted industrially.

[Description of Embodiments]

To begin with, the reasons for limiting the composition of a cold rolled steel sheet according to the present invention will be described. Hereafter, percent by mass is expressed simply as % unless otherwise specified.

C: 0.050% to 0.090%

Carbon is an element which forms a solid solution with a steel or precipitates as a carbide, so as to enhance the strength of the steel. In addition, formation of a bainite phase and a martensitic phase, which are low-temperature transformation phases, are made easy through an increase in hardenability, and microstructure strengthening contributes to enhancement of strength of a steel sheet. In order to ensure a tensile strength TS of 590 MPa or more by utilizing such actions, it is necessary that the content is 0.050% or more. On the other hand, if the content is more than 0.090%, the spot weldability is adversely affected and, in addition, the martensitic phase is made hard excessively, so that the stretch flangeability is degraded. Consequently, C is limited to within the range of 0.050% to 0.090%. In this regard, 0.060% to 0.080% is preferable.

Si: 0.05% or less

If a large amount of Si is contained, hardening is induced and the workability is degraded. Furthermore, if a large amount of Si is contained, Si oxides are generated especially in annealing and exerts adverse influences, e.g., hindrance to the chemical conversion treatability. Consequently, in the present invention, it is desirable that Si be minimized because Si is deemed as an impurity, and the content is limited to 0.05% or less.

Mn: 1.5% to 2.0%

Manganese is an element which forms a solid solution, so as to enhance the strength of the steel and, in addition, which contributes to enhancement of strength of the steel through an improvement in hardenability. Such an action becomes considerable when the content is 1.5% or more. On the other hand, if the content is more than 2.0% and is excessive, the hardenability is improved and the amount of generation of low-temperature transformation phases increases excessively. Therefore, the steel sheet is made hard excessively, it becomes difficult to ensure a predetermined ferrite phase fraction, and the press formability is degraded. Consequently, Mn is limited to within the range of 1.5% to 2.0%. In this regard, 1.6% to 1.9% is preferable.

P: 0.030% or less

Phosphorus segregates at grain boundaries and exert adverse influences, so as to degrade the ductility and the toughness. Furthermore, P degrades the spot weldability. Therefore, it is desirable that P be minimized. However, an excessive reduction increases the refining time for dephosphorization, reduces the production efficiency, and induces an increase in production cost. Therefore, 0.001% or more is preferable. Meanwhile, if the content is more than 0.030%, a significant degradation in the spot weldability is induced. Consequently, P is limited to 0.030% or less. In this regard, 0.001% or more and less than 0.020% is preferable.

S: 0.0050% or less

Most of S presents as an inclusion in a steel, hardly contributes to the strength and, in addition, forms coarse MnS, so as to degrade the ductility, in particular the stretch flangeability, because of serving as a start point of cracking in stretch flange forming. Therefore, it is preferable that S be minimized. However, an excessive reduction increases the desulfurization time in the steelmaking process, reduces the production efficiency, and induces an increase in production cost, so that 0.0001% or more is preferable. If the content is more than 0.0050%, the stretch flangeability is degraded considerably. Consequently, S is limited to 0.0050% or less. In this regard, 0.0001% to 0.0030% is preferable.

Al: 0.005% to 0.1%

Aluminum is an element which acts as a deoxidizing agent. In order to obtain this effect sufficiently, it is necessary that the content be 0.005% or more. On the other hand, if the content is more than 0.1%, the weldability in flash butt welding and the like is degraded. In addition, an effect of Al addition is saturated and the production cost increases because of a large amount of addition. Consequently, Al is limited to within the range of 0.005% to 0.1%. In this regard, 0.02% to 0.06% is preferable.

N: 0.01% or less

It is desirable that N be minimized because N is an impurity in the present invention and a solid solution of N may degrade an anti-aging property. However, an excessive reduction increases the refining time and induces an increase in production cost. Therefore, 0.0020% or more is preferable from the economic standpoint. Meanwhile, if the content is more than 0.01%, tendencies of slab cracking, slab internal defects, and the like to occur are enhanced, and a surface flaw may occur. Consequently, N is limited to 0.01% or less. In this regard, 0.0050% or less is preferable.

Ti: 0.005% to 0.050%

Titanium is an element which forms a carbonitride, so as to suppress coarsening of austenite grains in slab heating and the like and effectively contributes to finer, more uniform hot rolled sheet microstructure and steel sheet microstructure after annealing. In order to obtain such effects, it is necessary that the content be 0.005% or more. On the other hand, if the content is more than 0.050%, precipitates are generated in a ferrite phase excessively, and the ductility of the ferrite phase is degraded. In addition, if Ti is further excessively contained, the hot rolled sheet is hardened excessively, and rolling loads in hot rolling and cold rolling increase. Consequently, Ti is limited to within the range of 0.005% to 0.050%. In this regard, 0.010% to 0.0040% is preferable.

Nb: 0.020% to 0.080%

Niobium is an element which contributes to enhancement of strength of a steel on the basis of solid solution strengthening by forming a solid solution with the steel or on the basis of precipitation strengthening by forming a carbonitride. In order to obtain such effects, it is necessary that the content be 0.020% or more. On the other hand, if the content is more than 0.080% and is excessive, precipitates are generated in a ferrite phase excessively, and the ductility of the ferrite phase is degraded. In addition, the hot rolled sheet is hardened excessively, and rolling loads in hot rolling and cold rolling increase. Consequently, Nb is limited to within the range of 0.020% to 0.08%. In this regard, 0.030% to 0.050% is preferable.

As described above, Ti contributes to a finer, more uniform hot rolled sheet microstructure and steel sheet microstructure after annealing by suppressing coarsening of austenite grains. Meanwhile, Nb contributes to enhancement of strength of a steel on the basis of solid solution strengthening by forming a solid solution with the steel or on the basis of precipitation strengthening by forming a carbonitride. In the present invention, Ti and Nb having such actions are contained in combination. In this regard, in the present invention, it is preferable that the content of Nb be larger than the content of Ti when they are contained in combination.

In the case where the Nb content is specified to be larger than the Ti content when Ti and Nb are contained in combination, a microstructure in which crystal grains are uniform and fine is obtained as compared with the case where Ti is contained alone or Ti and Nb are contained in combination in such a way that the Nb content is smaller than the Ti content. Consequently, the bending characteristic is improved. Such an effect becomes considerable by specifying the ratio of (Nb content) to (Ti content), Nb/Ti, to be 1.5 or more. In this regard, Nb/Ti is preferably 1.8 or more and 5.0 or less.

Niobium and titanium are partly remelted at a heating stage of hot rolling and precipitate as a Ti based carbonitride or a Nb based carbonitride at the downstream rough rolling, finish rolling, and furthermore, coiling stages. The Ti based carbonitride precipitates at a high temperature. On the other hand, the Nb based carbonitride precipitates at a temperature lower than the temperature of the Ti based carbonitride. Consequently, the residence time of the Ti based carbonitride at a high temperature is large, so that grains grow and tend to become coarse. Meanwhile, the Nb based carbonitride is fine because the precipitation temperature is lower than the temperature of the Ti based carbonitride and the distribution is relatively dense. Fine carbonitrides have a crystal grain pinning effect and allow a microstructure of a finally obtained steel sheet to become a uniform fine microstructure by delaying recovery, recrystallization, and grain growth of a cold rolled microstructure in annealing. Inclusion of Ti and Nb in combination can obtain such a uniform fine microstructure and, therefore, the bending characteristic of the steel sheet is improved considerably.

The above-described components are basic components. However, in the present invention, as necessary, Ca: 0.0001% to 0.0050% may be further contained in addition to the basic components.

Ca: 0.0001% to 0.0050%

Calcium is an element effectively contributes to morphologic control of inclusions. For example, the ductility and the stretch flangeability are improved by morphologic control of inclusion in such a way that MnS which is extended to become a tabular inclusion in the cold rolling step is converted to CaS which is a spherical inclusion prior to the annealing step. Such an effect is observed when the content is 0.0001% or more. However, even when the content is more than 0.0050%, the effect is saturated and the effect commensurate with the content cannot be expected. Consequently, when Ca is contained, it is preferable that the content be limited to within the range of 0.0001% to 0.0050%. In this regard, 0.0005% to 0.0020% is more preferable.

The remainder other than the above-described components is composed of Fe and incidental impurities.

Next, the reasons for limiting the microstructure of the cold rolled steel sheet according to the present invention will be described.

The cold rolled steel sheet according to the present invention has a microstructure composed of 50% to 77% of ferrite phase, more than 30% and 50% or less of bainite phase, 2% to 10% of martensitic phase, and 1% to 5% of retained austenite phase on a percent by volume basis.

Ferrite phase: 50% to 77%

The ferrite phase is mild and contributes to the ductility (elongation) of the cold rolled steel sheet. In order to obtain such an effect, it is necessary that the volume fraction of the ferrite phase be 50% or more. On the other hand, if a large amount is contained and the volume fraction is more than 77%, predetermined strength (TS: 590 MPa or more) cannot be ensured. Consequently, the volume fraction of the ferrite phase is limited to within the range of 50% to 77%. In this regard, 50% to 65% is preferable, and 50% to 60% is more preferable. Meanwhile, if the crystal grain size of the ferrite phase is too large, low-temperature transformation phases are localized, so as to cause nonuniform deformation, and it becomes difficult to ensure excellent formability. On the other hand, if the crystal grain size of the ferrite phase is small, a low-temperature transformation phase and a ferrite phase adjoin, deformation of the ferrite phase is hindered, and it becomes difficult to ensure excellent formability. Consequently, it is preferable that the average crystal grain size of the ferrite phase be within the range of 1 to 10 $\mu$m.

Bainite phase: more than 30% and 50% or less

The bainite phase is one of low-temperature transformation phases and in order to ensure predetermined high strength, it is necessary that 20% or more of bainite phase be contained in the present invention. On the other hand, if more than 50% of bainite phase is contained and is excessive, the steel sheet is made hard excessively and the formability is degraded. Consequently, the volume fraction of the bainite phase is limited to within the range of more than 30% and 50% or less, and 35% to 45% is preferable. Meanwhile, if the average crystal grain size of the bainite phase is large and is more than 10 $\mu$m, the microstructure becomes a nonuniform microstructure, nonuniform deformation occurs in forming, and it becomes difficult to ensure excellent formability. On the other hand, if the average crystal grain size of the bainite phase is small and is less than 1 $\mu$m, contribution of the bainite phase to the deformability in working increases, deformation of the ferrite phase is hindered, and it becomes difficult to ensure excellent formability. Consequently, it is preferable that the average crystal grain size of the bainite phase be within the range of 1 to 10 $\mu$m.

Meanwhile, the ratio of the bainite phase to the martensitic phase is also important. The bainite phase is milder than the martensitic phase, and a difference in strength (difference in hardness) from the ferrite phase is smaller than that of the martensitic phase, so that the whole steel sheet is deformed uniformly in forming. Therefore, the bainite phase is more advantageous than the martensitic phase from the viewpoint of improvement in stretch flangeability. Consequently, in the present invention, the low-temperature transformation phase primarily contains the bainite phase and only a small amount of martensitic phase is contained. In this manner, excellent formability, e.g., stretch flangeability, can be ensured while predetermined high strength is ensured. In this regard, the low-temperature transformation phase in the present invention refers to the bainite phase and the martensitic phase.

Moreover, the bainite phase effectively contributes to an improvement in the bending workability as well. A predetermined amount of bainite phase in addition to the ferrite phase is allowed to present dispersing in the microstructure, so that a bending strain is not locally concentrated and uniform deformation can be performed. For this purpose, more than 30% of bainite phase is dispersed. The reason is as described below. In the case where the bainite phase is 30% or less and is small in fraction, microstructure fractions of mild ferrite phase, hard martensitic phase, and retained austenite phase increase, a strain is concentrated on the interface between the mild phase and the hard phase, and cracking may occur in bend-forming. When a predetermined amount of bainite phase having intermediate hardness is present, a strain does not locally concentrate in bend-forming, and the strain is dispersed, so that uniform deformation can be performed.

Martensitic phase: 2% to 10%

The martensitic phase is a hard low-temperature transformation phase and contributes to enhancement of strength of a steel sheet. However, in punching and shearing working, many voids are generated at the interface between the martensitic phase and the ferrite phase on the basis of a hardness difference between the martensitic phase and the ferrite phase, those voids are connected to each other in a press forming process, a crack is generated, and the crack is developed to reach fracture. Therefore, presence of a large amount of martensitic phase degrades the stretch flangeability. If the volume fraction of the martensitic phase increases and exceeds 10%, the strength becomes too large, the ductility is degraded significantly. In addition, the interface between the martensitic phase and the ferrite phase increases, and it becomes difficult to ensure excellent stretch flangeability. On the other hand, if the volume fraction of the martensitic phase decreases and becomes less than 2%, dispersion in the microstructure becomes coarse and, therefore, an influence on the stretch flangeability is reduced, although it becomes difficult to ensure predetermined high strength stably. Consequently, the volume fraction of the martensitic phase is limited to within the range of 2% to 10%. In this regard, 4% to 8% is preferable.

Meanwhile, it is preferable that the average crystal grain size of the martensitic phase be within the range of 0.5 to 5.0 $\mu$m. If the average crystal grain size of the martensitic phase is less than 0.5 $\mu$m, in the microstructure, the hard martensitic phase is fine-dispersed in the mild ferrite phase and, thereby, deformation becomes nonuniform because of a large hardness difference, so that it becomes difficult to ensure excellent formability. Meanwhile, if the martensitic phase is coarse and the average crystal grain size is more than 5.0 $\mu$m, the martensitic phase is maldistributed and the microstructure becomes nonuniform, so that deformation becomes nonuniform, and it becomes difficult to ensure excellent formability. Consequently, it is preferable that the average crystal grain size of the martensitic phase be limited to within the range of 0.5 to 5.0 $\mu$m.

Retained austenite phase: 1% to 5%

The retained austenite phase contributes to an improvement in the ductility (uniform elongation) through strain-induced transformation in forming. However, the retained austenite phase is hard because C is concentrated therein, and a hardness difference from the ferrite phase increases. Therefore, presence of the retained austenite phase causes degradation in the stretch flangeability. If the retained austenite phase increases and exceeds 5%, in punching and shearing working, many voids are generated at the interface between the retained austenite phase and the ferrite phase on the basis of a hardness difference from the ferrite phase, those voids are connected to each other in a press forming process, a crack is generated, and the crack is developed to reach fracture. On the other hand, if the volume fraction of the retained austenite phase decreases and becomes less than 1%, dispersion in the microstructure becomes coarse and, therefore, an influence on the stretch flangeability is reduced, although an improvement in the ductility is at a low level. Consequently, the volume fraction of the retained austenite phase is limited to within the range of 1% to 5%. In this regard, 1% to 3% is preferable.

The remainder other than the above-described phases is a cementite phase generated incidentally. The cementite phase generated incidentally does not exert an influence on the effect of the present invention insofar as the volume faction is less than 3%.

Meanwhile, the average crystal grain sizes of the ferrite phase, the bainite phase, the martensitic phase, and the like may be calculated by a cutting method on the basis of a JIS method or image analysis after the microstructure is identified by observing at least 5 visual fields with an optical microscope (magnification: 200 to 1,000 times).

Next, a preferable method for manufacturing a cold rolled steel sheet according to the present invention will be described.

A steel having the above-described composition is subjected to a hot rolling step, a cold rolling step, and an annealing step or furthermore a temper rolling step besides them sequentially, so as to produce a cold rolled steel sheet.

A method for manufacturing the steel is not necessarily specifically limited. Preferably, a molten steel having the above-described composition is refined by a common refining method, e.g., a converter method or an electric furnace method, and is made into a steel, e.g., a slab, by a common casting method, e.g., a continuous casting method. It is desirable that the method for casting the steel be a continuous casting method in order to prevent macro segregation of components. However, employment of an ingot-making method or a thin slab casting method has no problem.

Then, the resulting steel is subjected to the hot rolling step. As for the heating for hot rolling, besides a method in which cooling to room temperature is performed once and, thereafter, reheating is performed, energy-saving processes, e.g., direct feed rolling, direct rolling, and the like in which a warm piece is as-is charged into a furnace without being cooled to room temperature, or rolling is performed immediately after the heat is kept to some extent can be applied with no problem.

It is preferable that the hot rolling step be a step in which the steel having the above-described composition is subjected to common hot rolling composed of rough rolling and finish rolling after heating or without heating, so as to be converted to a hot rolled sheet having predetermined size and shape and is coiled. In the present invention, the condition of hot rolling is not necessarily specifically limited insofar as a hot rolled sheet having predetermined size and shape is produced, although the following condition is preferable.

It is preferable that the heating temperature of the steel be 1,150°C or higher. If the heating temperature is lower than 1,150°C, a rolling load of hot rolling increases. In this regard, an upper limit of the heating temperature is not necessarily specifically limited, but is preferably specified to be 1,300°C or lower from the viewpoints of coarsening of crystal grain, scale loss due to oxidation, and the like. The heated steel is roughly rolled into a sheet bar having predetermined size and shape. The condition of rough rolling is not necessarily specifically limited insofar as a sheet bar having predetermined size and shape can be produced. Subsequently, the sheet bar is subjected to finish rolling, so as to produce a hot rolled sheet. It is preferable that the finishing delivery temperature in the finish rolling be 880°C or higher. If the finishing delivery temperature is lower than 880°C, crystal grains are extended and the workability of the cold rolled steel sheet is degraded. Consequently, in the steel composition range according to the present invention, it is preferable that the finishing delivery temperature in the finish rolling be 880°C or higher. Meanwhile, the upper limit of the finishing delivery temperature is not necessarily specifically limited. However, if the finishing delivery temperature is too high, there is a problem in that the crystal grains are coarsened and the workability of the cold rolled sheet is degraded. Therefore, about 950°C or lower is preferable. Then, the resulting hot rolled sheet is coiled into the shape of a coil. The cooling rate until coiling is not necessarily specifically limited, and it is enough that the cooling rate is larger than or equal to the rate of air cooling. In this regard, as necessary, accelerated cooling, for example, quenching at 50°C/s or more may be performed. Meanwhile, the coiling temperature is preferably 450°C to 650°C. If the coiling temperature is lower than 450°C, the hot rolled sheet becomes hard, cold rolling load increases, and it becomes difficult to ensure rolling reduction of cold rolling. On the other hand, if the coiling temperature is higher than 650°C, variations in the cooling rate after coiling occur in the longitudinal direction and the transverse direction in the coil, the microstructure becomes nonuniform, and an odd shape occurs after cold rolling easily.

Then, the hot rolled sheet is subjected to a pickling treatment and, thereafter, the cold rolling, step. In the cold rolling step, it is preferable that common cold rolling be performed, where the hot rolled sheet is subjected to cold rolling at a predetermined rolling reduction of cold rolling, so as to produce cold rolled sheet. In the present invention, the condition of the cold rolling step is not necessarily specifically limited, although it is preferable that the rolling reduction of cold rolling be determined in accordance with the sheet thicknesses of the hot rolled sheet and a product sheet. Usually, there is no problem in the workability and the sheet thickness precision insofar as the rolling reduction of cold rolling is 30% or more. On the other hand, if the rolling reduction of cold rolling is more than 70%, a load on a cold mill is too large and an operation is difficult.

Subsequently, the cold rolled sheet is subjected to the annealing step. The annealing step in the present invention is specified to be a step including two-step heating and two-step cooling. The maximum achieving temperature in heating is specified to be 800°C to 900°C and, thereafter, two-step cooling is performed.

If the maximum achieving temperature is lower than 800°C, the amount of $\alpha \to \gamma$ transformation in heating is small and, therefore, the microstructure at the point in time when the maximum achieving temperature is reached becomes ferrite + austenite two-phase microstructure in which much ferrite is contained, so that the microstructure fraction of the ferrite phase becomes too large and the finally obtained steel sheet microstructure cannot ensure predetermined high strength. On the other hand, if the maximum achieving temperature is higher than 900°C, an austenite (y) single phase is produced, and $\gamma$ crystal grains are coarsened. Therefore, the microstructure fraction of the ferrite phase generated in cooling, which is performed thereafter, is reduced and the workability is degraded. In addition, crystal grain sizes of the generated ferrite phase and the low-temperature transformation phase are coarsened easily, and the stretch flangeability is degraded. Consequently, the maximum achieving temperature is limited to within the range of 800°C to 900°C.

The two-step heating includes the first-step heating and the following second-step heating. The heating process is important for adjusting the microstructure fractions of the ferrite phase and the bainite phase. The first-step heating is specified to be a treatment to heat the cold rolled sheet at least from 50°C to a first-step heating achieving temperature in a temperature range of (maximum achieving temperature - 50°C) to (maximum achieving temperature - 10°C) at an average temperature raising rate: 0.5°C to 5.0°C/s. In this regard, the heating condition up to 50°C is not necessarily specifically limited, and the heating may be performed on the basis of a common method appropriately. If the temperature raising rate in the first-step heating is less than 0.5°C/s or less, the temperature raising rate is too small, and coarsening of austenite grains proceeds, so that $\gamma \to \alpha$ transformation is delayed because of coarsening of the austenite grains in the cooling, the microstructure fraction of the generated ferrite phase is reduced, and the workability is degraded because of becoming hard. On the other hand, the temperature raising rate in the first-step heating increases and becomes more than 5.0°C/s, generated austenite grains are made fine, the microstructure fraction of the finally obtained ferrite phase increases, and it becomes difficult to ensure predetermined high strength. Consequently, the temperature raising rate in the first-step heating is limited to within the range of 0.5°C/s to 5.0°C/s in average. In this regard, 1.5°C/s to 3.5°C/s is preferable.

Meanwhile, if the first-step heating achieving temperature is lower than (maximum achieving temperature - 50°C), the second-step heating up to the maximum achieving temperature becomes rapid heating, and it becomes difficult to ensure predetermined microstructure fraction stably. On the other hand, if the first-step heating achieving temperature becomes high and is higher than (maximum achieving temperature - 10°C), the second-step heating up to the maximum achieving temperature becomes slow heating, and a residence time at high temperatures increases, the crystal grains are excessively coarsened, and the workability is degraded. Consequently, the first-step heating achieving temperature is limited to a temperature within the temperature range of (maximum achieving temperature - 50°C) to (maximum achieving temperature - 10°C).

The second-step heating is specified to be a treatment to heat in such a way that the temperature raising time from the first-step heating achieving temperature to the maximum achieving temperature becomes 30 to 150 s. If the temperature raising time from the first-step heating achieving temperature to the maximum achieving temperature is less than 30 s, the heating up to the maximum achieving temperature becomes too rapid, the $\alpha \to \gamma$ transformation is delayed, the microstructure fraction of the ferrite phase increases when the maximum achieving temperature is reached finally, and predetermined high strength cannot be ensured. In addition, diffusion of alloy elements, e.g., C and Mn, becomes insufficient. As a result, the microstructure becomes nonuniform and the workability is degraded. On the other hand, if the temperature raising time increases and is more than 150 s, the crystal grain sizes increase, and the workability is degraded easily. Consequently, the temperature raising time of the second-step heating is adjusted to become within the range of 30 to 150 s.

Immediately after the second-step heating is finished, cooling is performed.

The cooling after the heating is specified to be two-step cooling. The cooling is important for adjusting the microstructure fractions of the mild ferrite phase and the hard bainite phase, so as to provide both high strength of a tensile strength TS: 590 MPa or more and excellent workability. For this purpose, it is necessary that a cooling pattern, i.e., a cooling rate and a cooling time, is adjusted precisely in order that a predetermined metal microstructure can be ensured by the cooling. The two-step cooling includes the first-step cooling and the following second-step cooling which is slow cooling as compared with the first-step cooling. The first-step cooling and the second-step cooling are important for adjusting the microstructure fractions of the ferrite phase and the bainite phase.

The first-step cooling is specified to be a treatment to cool from the maximum achieving temperature at a cooling rate of an average cooling rate: 10°C to 40°C/s (first-step cooling rate). If the first-step cooling rate is less than 10°C/s, the microstructure fraction of the mild ferrite phase increases and it becomes difficult to ensure predetermined high strength. On the other hand, if the first-step cooling rate is more than 40°C/s and, therefore, cooling is rapid, the amount of generation of ferrite phase is reduced, so that the steel sheet is made hard and the workability is degrade.

Meanwhile, the second-step cooling is specified to be a treatment to cool, immediately after the first-step cooling, to the second-step cooling stop temperature of 400°C to 500°C at a second-step cooling rate of (0.2 to 0.8) × (first-step-cooling rate) depending on the first-step cooling rate.

If the second-step cooling rate is less than 0.2 × (first-step cooling rate), the cooling is too slow, generation of the mild ferrite phase is facilitated, the microstructure fraction of the bainite phase is reduced, and predetermined high strength cannot be ensured. On the other hand, if the second-step cooling rate is more than 0.8 × (first-step cooling rate), the cooling is too rapid, the residence time from start to finish of bainite transformation is reduced, the microstructure fraction of the bainite phase is reduced, and predetermined high strength cannot be ensured. Consequently, the second-step cooling rate is limited to within the range of 0.2 × (first-step cooling rate) to 0.8 × (first-step cooling rate). In the present invention, the cooling times of the first-step cooling and the second-step cooling are allocated in order to ensure the predetermined fractions of the ferrite phase and the bainite phase.

That is, the cooling time of the second-step cooling is specified to be a cooling time of 0.2 to 0.8 times the total cooling time which is a total of the cooling times of the first-step cooling and the second-step cooling. That is, the cooling time of the second-step cooling is specified to be (0.2 to 0.8) × (total cooling time). If the cooling time of the second-step cooling is less than 0.2 times the total cooling time, the cooling time in the first-step cooling increases, the amount of generation of ferrite phase is reduced, the microstructure fraction of the bainite phase becomes too large, the steel sheet is made hard, and predetermined stretch flangeability cannot be ensured. On the other hand, if the cooling time increases and is more than 0.8 times the total cooling time, the cooling time in the second-step cooling excessively increases, the elapsed time from start to finish of ferrite transformation increases, the amount of generation of the ferrite phase increases, and predetermined high strength cannot be ensured. Consequently, the cooling time of the second-step cooling is limited to 0.2 to 0.8 times the total cooling time.

Meanwhile, if the cooling stop temperature in the second-step cooling is lower than 400°C, the microstructure primarily contains a hard martensitic phase, the steel sheet is made hard excessively, and the stretch flangeability is degraded. On the other hand, if the cooling stop temperature in the second-step cooling is higher than 500°C, the microstructure primarily contains a bainite phase, and the microstructure fraction of the ferrite phase is reduced, the steel sheet is made hard. In addition, the pearlite phase is generated and it becomes difficult to ensure excellent workability. Consequently, the cooling stop temperature in the second-step cooling is limited to within the range of 400°C to 500°C.

After the cooling is finished, that is, after the second-step cooling is stopped, in the present invention, staying is performed in a region of 400°C to 500°C for 100 to 1,000 s. Adjustment of the residence time after the cooling is stopped is important for adjusting the microstructure fraction of the bainite phase. If the residence time is less than 100 s, transformation from austenite to bainite is insufficient, and untransformed austenite is transformed to a martensitic phase, so that the microstructure fraction of the martensitic phase increases, the steel sheet is made hard, and the workability is degraded. On the other hand, if the residence time increases and becomes more than 1,000 s, the microstructure fraction of the bainite phase increases, and it becomes difficult to ensure predetermined excellent workability. Consequently, the residence time after the cooling is stopped is limited to within the range of 100 to 1,000 s. After the above-described staying, cooling is performed continuously. The condition thereof is not necessarily specifically limited, and the cooling may be performed appropriately in accordance with production facilities and the like.

After the annealing step, the cold rolled and annealed sheet may be subjected to a temper rolling step for the purpose of shape correction and surface roughness adjustment. Excessive temper rolling extends crystal grains into rolled microstructure, so that the ductility is degraded and the workability is degraded. Therefore, it is preferable that the temper rolling step be a step of applying temper rolling with an elongation percentage: 0.05% to 0.5%.

[EXAMPLES]

The present invention will be described below in detail with reference to the examples.

Molten steels having compositions shown in Table 1 were refined with a converter, and slabs (steels) were produced by a continuous casting method. These steels (slabs) were served as start raw materials and were subjected to a hot rolling step in which a hot rolled sheet was produced by performing heating to 1,200°C and, thereafter, applying hot rolling with a finishing delivery temperature: 900°C and a coiling temperature: 600°C. Subsequently, the hot rolled sheet was subjected to pickling with hydrochloric acid and, then, cold rolled and annealed sheet having a sheet thickness: 1.4 mm was obtained by performing a cold rolling step of applying cold rolling to produce a cold rolled sheet and the following annealing step of applying an annealing treatment including two-step heating and two-step cooling under the conditions shown in Table 2.

Test pieces were taken from the resulting cold rolled steel sheet (cold rolled and annealed sheet), and a microstructure observation test, a tensile test, a hole expansion test, and a bending test were performed. Test methods were as described below.

(1) Microstructure observation test

A test piece for microstructure observation was taken from the resulting cold rolled steel sheet, a cross-section in the rolling direction was polished, and was corroded (nital solution). A position at one-quarter sheet thickness was observed with an optical microscope (magnification: 1,000 times) or a scanning electron microscope (magnification: 3,000 times) with the number of visual fields: at least 5 visual fields, and an image was photographed. From the resulting microstructure photograph, the microstructure was identified and, in addition, the grain size and the microstructure fraction (percent by volume) of each phase were determined.

The average crystal grain size of the ferrite phase was determined by a cutting method on the basis of the method defined in JIS G 0552. The same went for the bainite phase and the martensitic phase.

Meanwhile, a microstructure photograph under magnification: 1,000 times was used, and an area occupied by each phase present in a randomly chosen $100 \times 100$ mm square region on the microstructure photograph was determined with an image analyzer and was converted to the microstructure fraction (percent by volume) of each phase. As for distinction between the bainite phase which was a low-temperature transformation phase from the austenite phase and the martensitic phase, a microstructure photograph under magnification: 3,000 times was used, and in the low-temperature transformation phases other than the ferrite phase, a phase in which carbides were observed was specified to be a bainite phase and a phase in which a carbide was not observed and which was observed as a smooth phase was specified to be a martensitic phase or a retained austenite phase. In this regard, the amount of retained austenite phase was determined by X-ray diffraction. Then, the remainder other than the ferrite phase, the bainite phase, and the retained austenite phase was specified to be the microstructure fraction of the martensitic phase.

(2) Tensile test

A JIS No. 5 tensile test piece was taken from the resulting cold rolled steel sheet on the basis of JIS Z 2201 in such a way that a tensile direction became in the direction orthogonal to the rolling direction, a tensile test was performed on the basis of JIS Z 2241, and the tensile characteristics (yield strength YS, tensile strength TS, and elongation EL) were determined.

(3) Hole expansion test

A test piece (size: $100 \times 100$ mm) was taken from the resulting cold rolled steel sheet, and a hole expansion test was performed on the basis of the Japan Iron and Steel Federation Standard JFST1001. A hole having an initial diameter $d_0$: 10 mm was punched in the test piece. A cone punch having a vertical angle: 60° was pushed into the hole and was raised to expand the hole, and the raising of the cone punch was stopped when a crack penetrated the sheet thickness. A diameter d of the punched hole after penetration of the crack was measured and a hole expansion ratio $\lambda$ (%) was determined. The hole expansion ratio $\lambda$ was calculated by the following formula.

$$\lambda\ (\%)\ =\ \{(d\ -\ d_0)/d_0\}\ \times\ 100$$

In this regard, the test was performed three times per steel sheet and the average value thereof was taken as the hole expansion ratio $\lambda$ of the steel sheet concerned.

(4) Bending test

A bending test piece (size: 40 × 50 mm) was taken from the resulting cold rolled steel sheet, and 90° V bending with a tip bending radius R: 1.0 mm was performed. Presence or absence of crack at the bending apex was observed visually and, thereby, the bendability was evaluated.
The obtained results are shown in Table 3.

[Table 1]

| Steel No. | C | Si | Mn | P | S | Al | N | Ti | Nb | Ca | Nb/Ti | Remarks |
|---|---|---|---|---|---|---|---|---|---|---|---|---|
| A | 0.085 | 0.02 | 1.55 | 0.015 | 0.0018 | 0.038 | 0.0042 | 0.009 | 0.041 | 0.0007 | 4.6 | Conforming example |
| B | 0.075 | 0.02 | 1.65 | 0.011 | 0.0016 | 0.025 | 0.0041 | 0.018 | 0.038 | - | 2.1 | Conforming example |
| C | 0.065 | 0.02 | 1.75 | 0.013 | 0.0014 | 0.031 | 0.0034 | 0.025 | 0.041 | 0.0016 | 1.6 | Conforming example |
| D | 0.055 | 0.02 | 1.85 | 0.015 | 0.0012 | 0.034 | 0.0032 | 0.011 | 0.033 | - | 3.0 | Conforming example |
| E | 0.060 | 0.02 | 1.92 | 0.014 | 0.0008 | 0.045 | 0.0028 | 0.018 | 0.044 | 0.0028 | 2.4 | Conforming example |
| F | 0.070 | 0.02 | 1.90 | 0.014 | 0.0015 | 0.035 | 0.0035 | 0.015 | 0.042 | - | 2.8 | Conforming example |
| G | 0.080 | 0.02 | 1.80 | 0.013 | 0.0017 | 0.025 | 0.0045 | 0.022 | 0.036 | 0.0018 | 1.6 | Conforming example |
| H | 0.135 | 0.02 | 1.70 | 0.012 | 0.0013 | 0.044 | 0.0033 | 0.032 | 0.015 | - | 0.5 | Comparative example |
| I | 0.085 | 0.02 | 2.55 | 0.011 | 0.0011 | 0.024 | 0.0044 | 0.041 | 0.018 | 0.0035 | 0.4 | Comparative example |

Chemical component (mass%)

EP 2 615 191 B1

[Table 2]

| Steel sheet No. | Steel No. | Annealing step | | | | | | | Remarks |
|---|---|---|---|---|---|---|---|---|---|
| | | First-step heating | | | | | Second-step heating | | |
| | | Temperature raising rate (℃/s) | First-step heating achieving temperature (℃) | (Maximum achieving temperature − 50℃) | (Maximum achieving temperature − 10℃) | Suitability of heating achieving temperature | Temperature raising time (s) | Maximum achieving temperature (℃) | |
| 1 | A | 1.8 | 825 | 805 | 845 | ○ | 90 | 855 | Invention example |
| 2 | B | 2.2 | 800 | 785 | 825 | ○ | 70 | 835 | Invention example |
| 3 | C | 1.7 | 805 | 775 | 815 | ○ | 90 | 825 | Invention example |
| 4 | D | 3.2 | 825 | 790 | 830 | ○ | 50 | 840 | Invention example |
| 5 | E | 1.6 | 810 | 800 | 840 | ○ | 100 | 850 | Invention example |
| 6 | F | 2.2 | 830 | 795 | 835 | ○ | 80 | 845 | Invention example |
| 7 | G | 2.7 | 840 | 810 | 850 | ○ | 60 | 860 | Invention example |
| 8 | H | 1.4 | 855 | 830 | 870 | ○ | 120 | 880 | Comparative example |
| 9 | I | 3.1 | 835 | 820 | 860 | ○ | 60 | 870 | Comparative example |
| 10 | A | 0.4 | 820 | 790 | 830 | ○ | 140 | 840 | Comparative example |
| 11 | A | 5.4 | 800 | 780 | 820 | ○ | 30 | 830 | Comparative example |
| 12 | B | 2.3 | 740 | 730 | 770 | ○ | 70 | 780 | Comparative example |
| 13 | B | 2.6 | 915 | 880 | 920 | ○ | 70 | 930 | Comparative example |
| 14 | B | 4.0 | 835 | 805 | 845 | ○ | 20 | 855 | Comparative example |
| 15 | B | 1.0 | 800 | 795 | 835 | ○ | 170 | 845 | Comparative example |
| 16 | C | 1.0 | 820 | 785 | 825 | ○ | 140 | 835 | Comparative example |
| 17 | C | 3.1 | 810 | 775 | 815 | ○ | 50 | 825 | Comparative example |
| 18 | C | 1.7 | 790 | 770 | 810 | ○ | 90 | 820 | Comparative example |
| 19 | C | 2.6 | 820 | 790 | 830 | ○ | 60 | 840 | Comparative example |
| 20 | D | 1.9 | 845 | 810 | 850 | ○ | 90 | 860 | Comparative example |
| 21 | D | 2.3 | 850 | 830 | 870 | ○ | 80 | 880 | Comparative example |
| 22 | E | 1.6 | 790 | 780 | 820 | ○ | 100 | 830 | Comparative example |
| 23 | E | 2.4 | 825 | 790 | 830 | ○ | 70 | 840 | Comparative example |
| 24 | E | 3.7 | 825 | 800 | 840 | ○ | 40 | 850 | Comparative example |
| 25 | E | 0.7 | 845 | 810 | 850 | ○ | 140 | 860 | Comparative example |

[Table 2 continued]

| Steel sheet No. | Steel No. | Annealing step | | | | | | | Total cooling time (s) | Residece time* (s) | Remarks |
|---|---|---|---|---|---|---|---|---|---|---|---|
| | | First-step cooling | | Second-step cooling | | | | | | | |
| | | Average cooling rate (℃/s) | Cooling time (s) | Average cooling rate (℃/s) | (Second-step cooling rate) /(first-step cooling rate) | Cooling time (s) | Second-step cooling time/total cooling time | Cooling stop temperature (℃) | | | |
| 1 | A | 22 | 14 | 10 | 0.45 | 13 | 0.48 | 420 | 27 | 190 | Invention example |
| 2 | B | 25 | 11 | 10 | 0.40 | 10 | 0.48 | 460 | 21 | 150 | Invention example |
| 3 | C | 15 | 19 | 7 | 0.47 | 8 | 0.30 | 480 | 27 | 190 | Invention example |
| 4 | D | 38 | 6 | 15 | 0.39 | 9 | 0.60 | 480 | 15 | 110 | Invention example |
| 5 | E | 28 | 10 | 6 | 0.21 | 20 | 0.67 | 450 | 30 | 210 | Invention example |
| 6 | F | 24 | 14 | 10 | 0.42 | 8 | 0.36 | 430 | 22 | 160 | Invention example |
| 7 | G | 25 | 8 | 18 | 0.72 | 10 | 0.56 | 480 | 18 | 130 | Invention example |
| 8 | H | 15 | 15 | 10 | 0.67 | 20 | 0.57 | 460 | 35 | 250 | Comparative example |
| 9 | I | 30 | 6 | 20 | 0.67 | 10 | 0.63 | 490 | 16 | 110 | Comparative example |
| 10 | A | 20 | 14 | 5 | 0.25 | 26 | 0.65 | 430 | 40 | 280 | Comparative example |
| 11 | A | 38 | 7 | 28 | 0.74 | 3 | 0.30 | 480 | 10 | 110 | Comparative example |
| 12 | B | 21 | 11 | 15 | 0.71 | 8 | 0.42 | 430 | 19 | 140 | Comparative example |
| 13 | B | 35 | 8 | 14 | 0.40 | 12 | 0.60 | 480 | 20 | 140 | Comparative example |
| 14 | B | 38 | 9 | 25 | 0.66 | 3 | 0.25 | 440 | 12 | 110 | Comparative example |
| 15 | B | 15 | 25 | 5 | 0.33 | 35 | 0.70 | 450 | 50 | 360 | Comparative example |
| 16 | C | 8 | 35 | 6 | 0.75 | 10 | 0.22 | 500 | 45 | 320 | Comparative example |
| 17 | C | 60 | 4 | 15 | 0.25 | 11 | 0.73 | 420 | 15 | 110 | Comparative example |
| 18 | C | 25 | 14 | 2 | 0.08 | 13 | 0.48 | 440 | 27 | 190 | Comparative example |
| 19 | C | 25 | 4 | 22 | 0.88 | 14 | 0.78 | 430 | 18 | 130 | Comparative example |
| 20 | D | 19 | 21 | 8 | 0.42 | 4 | 0.16 | 430 | 25 | 180 | Comparative example |
| 21 | D | 38 | 2 | 16 | 0.42 | 20 | 0.91 | 480 | 22 | 160 | Comparative example |
| 22 | E | 25 | 15 | 10 | 0.40 | 15 | 0.50 | 300 | 30 | 210** | Comparative example |
| 23 | E | 19 | 5 | 13 | 0.68 | 15 | 0.75 | 550 | 20 | 140** | Comparative example |
| 24 | E | 38 | 4 | 25 | 0.66 | 9 | 0.69 | 470 | 13 | 90 | Comparative example |
| 25 | E | 11 | 20 | 4 | 0.36 | 50 | 0.71 | 440 | 70 | 1200 | Comparative example |

*)cooling stop temperature range of second-step cooling: 400℃ to 500℃
**)residence time at cooling stop temperature

EP 2 615 191 B1

EP 2 615 191 B1

[Table 3]

| Steel sheet No. | Steel No. | Steel sheet microstructure | | | | | | | | | | Test result | | | | | | Remarks |
|---|---|---|---|---|---|---|---|---|---|---|---|---|---|---|---|---|---|---|
| | | Ferrite | | Bainite | | Martensite | | Retained γ | Tensile characteristics | | | Hole expansion property | TS×El (MPa%) | TS×λ (Mpa%) | Bendability | | |
| | | Average crystal grain size (μm) | Fraction (vol%) | Average crystal grain size (μm) | Fraction (vol%) | Average crystal grain size (μm) | Fraction (vol%) | Fraction (vol%) | YP (MPa) | TS (MPa) | El (%) | λ (%) | | | Presence or absence of crack* | |
| 1 | A | 3.2 | 53 | 3.8 | 41 | 1.3 | 4 | 2 | 461 | 612 | 26.7 | 71 | 16340 | 43452 | O | Invention example |
| 2 | B | 2.3 | 55 | 2.9 | 37 | 1.0 | 7 | 1 | 448 | 598 | 27.1 | 72 | 16206 | 43056 | O | Invention example |
| 3 | C | 2.1 | 59 | 2.3 | 36 | 0.8 | 4 | 1 | 452 | 605 | 26.8 | 75 | 16214 | 45375 | O | Invention example |
| 4 | D | 2.8 | 56 | 3.2 | 40 | 0.9 | 2 | 2 | 473 | 628 | 25.7 | 77 | 16140 | 48356 | O | Invention example |
| 5 | E | 2.9 | 53 | 3.4 | 38 | 1.3 | 7 | 2 | 467 | 613 | 26.6 | 79 | 16306 | 48427 | O | Invention example |
| 6 | F | 3.4 | 52 | 2.7 | 43 | 1.2 | 4 | 1 | 462 | 604 | 26.9 | 81 | 16248 | 48924 | O | Invention example |
| 7 | G | 2.8 | 57 | 4.5 | 37 | 1.4 | 3 | 3 | 444 | 595 | 27.4 | 76 | 16303 | 45220 | O | Invention example |
| 8 | H | 3.4 | 22 | 5.1 | 68 | 1.2 | 8 | 2 | 442 | 680 | 22.0 | 35 | 14960 | 23800 | × | Comparative example |
| 9 | I | 3.2 | 28 | 4.4 | 65 | 1.3 | 5 | 2 | 453 | 697 | 22.8 | 38 | 15892 | 26486 | × | Comparative example |
| 10 | A | 10.8 | 35 | 8.5 | 48 | 2.8 | 14 | 3 | 463 | 712 | 21.2 | 31 | 15094 | 22072 | × | Comparative example |
| 11 | A | 1.7 | 87 | 2.4 | 9 | 1.1 | 1 | 3 | 354 | 544 | 24.6 | 91 | 13382 | 49504 | O | Comparative example |
| 12 | B | 2.4 | 86 | 3.6 | 9 | 1.3 | 1 | 4 | 343 | 527 | 28.4 | 97 | 14967 | 51119 | O | Comparative example |
| 13 | B | 12.4 | 22 | 8.1 | 65 | 3.1 | 10 | 3 | 452 | 695 | 22.4 | 36 | 15568 | 25020 | × | Comparative example |
| 14 | B | 3.6 | 82 | 3.6 | 13 | 1.8 | 3 | 2 | 335 | 516 | 29.8 | 98 | 15377 | 50568 | O | Comparative example |
| 15 | B | 11.6 | 22 | 10.6 | 72 | 3.6 | 4 | 2 | 458 | 704 | 22.6 | 29 | 15910 | 20416 | × | Comparative example |
| 16 | C | 3.1 | 88 | 2.4 | 8 | 1.1 | 3 | 1 | 343 | 528 | 29.7 | 98 | 15682 | 51744 | O | Comparative example |
| 17 | C | 2.7 | 46 | 2.4 | 49 | 1.3 | 4 | 1 | 441 | 678 | 21.6 | 35 | 14645 | 23730 | × | Comparative example |
| 18 | C | 2.4 | 85 | 1.8 | 11 | 1.2 | 2 | 2 | 349 | 537 | 28.7 | 88 | 15412 | 47256 | O | Comparative example |
| 19 | C | 2.6 | 46 | 3.2 | 15 | 1.2 | 38 | 1 | 471 | 725 | 20.6 | 31 | 14935 | 22475 | O | Comparative example |
| 20 | D | 3.3 | 26 | 4.1 | 68 | 1.5 | 4 | 2 | 437 | 672 | 23.4 | 35 | 15725 | 23520 | × | Comparative example |
| 21 | D | 4.5 | 85 | 5.5 | 11 | 1.6 | 3 | 1 | 343 | 528 | 27.8 | 89 | 14678 | 46992 | O | Comparative example |
| 22 | E | 2.6 | 54 | 2.6 | 28 | 1.3 | 16 | 2 | 464 | 714 | 21.5 | 31 | 15351 | 22134 | × | Comparative example |
| 23 | E | 2.4 | 38 | 3.2 | 37 | 1.2 | 2 | 1 | 452 | 695 | 22.8 | 34 | 15846 | 23630 | × | Comparative example |
| 24 | E | 2.8 | 36 | 3.8 | 46 | 1.6 | 16 | 2 | 472 | 726 | 21.3 | 29 | 15464 | 21054 | × | Comparative example |
| 25 | E | 3.6 | 26 | 4.1 | 68 | 1.3 | 5 | 1 | 362 | 557 | 22.5 | 77 | 12533 | 42889 | O | Comparative example |

*)O:no crack  ×:crack is present

17

In all Invention examples, high strength cold rolled steel sheets were produced having high strength of a tensile strength TS: 590 MPa or more and excellent stretch flangeability satisfying strength-elongation balance TS x El of 16,000 MPa or more and strength-hole expansion ratio balance TS x λ of 40,000 MPa or more and, in addition, having excellent bendability resistant to severe bending. On the other hand, in Comparative examples out of the scope of the present invention, the strength was short, the elongation El was short, or the TS x El was less than 16,000 MPa and, therefore, the stretch flangeability was degraded. Meanwhile, in Comparative examples satisfying a tensile strength TS: 590 MPa or more, the hole expansion ratio was low and the TS x λ was less than 40,000 MPa.

In Comparative examples (Steel sheet No. 8 and No. 9) in which the compositions were out of the scope of the present invention, the ferrite phase was reduced, a predetermined microstructure was not able to be ensured, the elongation El was small, and the stretch flangeability and the bendability were degraded.

In each of Comparative example (Steel sheet No. 10) in which the temperature raising rate in the annealing step was small and was out of the scope of the present invention, Comparative example (Steel sheet No. 13) in which the maximum achieving temperature was high and was out of the scope of the present invention, Comparative example (Steel sheet No. 15) in which the temperature raising time of the second-step heating was large and was out of the scope of the present invention, Comparative example (Steel sheet No. 17) in which the cooling rate of the first-step cooling was large and was out of the scope of the present invention, Comparative example (Steel sheet No. 19) in which the cooling rate of the second-step cooling was large and was out of the scope of the present invention, Comparative example (Steel sheet No. 20) in which the cooling time of the second-step cooling was small and was out of the scope of the present invention, Comparative example (Steel sheet No. 23) in which the cooling stop temperature in the second-step cooling was high and was out of the scope of the present invention, and Comparative examples (Steel sheet No. 24 and No. 25) in which the residence times were out of the scope of the present invention, the microstructure fraction of the ferrite phase was small, and the stretch flangeability was degraded. In this regard, in Comparative example (Steel sheet No. 25) in which the residence time was large and was out of the scope of the present invention, the microstructure fraction of the bainite phase was out of the scope of the present invention, and the stretch flangeability was degraded.

Meanwhile, in each of Comparative example (Steel sheet No. 11) in which the temperature raising rate in the annealing step was large and was out of the scope of the present invention, Comparative example (Steel sheet No. 12) in which the maximum achieving temperature was low and was out of the scope of the present invention, Comparative example (Steel sheet No. 14) in which the temperature raising time of the second-step heating was small and was out of the scope of the present invention, Comparative example (Steel sheet No. 16) in which the cooling rate of the first-step cooling was small and was out of the scope of the present invention, Comparative example (Steel sheet No. 18) in which the cooling rate of the second-step cooling was small and was out of the scope of the present invention, and Comparative example (Steel sheet No. 21) in which the cooling time of the second-step cooling was large and was out of the scope of the present invention, the microstructure fraction of the ferrite phase was too large, the microstructure fraction of the bainite phase or the martensitic phase was small and, therefore, predetermined high strength was not able to be ensured. In Comparative example (Steel sheet No. 22) in which the cooling stop temperature in the second-step cooling was low and was out of the scope of the present invention, the microstructure fraction of the martensitic phase was out of the scope of the present invention, and the stretch flangeability was degraded.

## Claims

1.  A high strength cold rolled steel sheet having excellent stretch flangeability, comprising:

    a composition containing

    | | |
    | --- | --- |
    | C: 0.050% to 0.090%, | Si: 0.05% or less, |
    | Mn: 1.5% to 2.0%, | P: 0.030% or less, |
    | S: 0.0050% or less, | Al: 0.005% to 0.1%, |
    | N: 0.01% or less, | Ti: 0.005% to 0.050%, |
    | Nb: 0.020% to 0.080%, | |

    and optionally further containing Ca: 0.0001% to 0.0050%,
    and the balance being Fe and incidental impurities, on a percent by mass basis, and
    a microstructure consisting of 50% to 77% of ferrite phase, more than 30% and 50% or less of bainite phase, 2% to 10% of martensitic phase, 1% to 5% of retained austenite phase and optionally less than 3% of cementite phase.

**2.** A method for manufacturing a high strength cold rolled steel sheet having excellent stretch flangeability, the method comprising: subjecting a steel to a hot rolling step, a cold rolling step, and an annealing step sequentially, so as to produce a cold rolled steel sheet, wherein the steel is specified to be a steel having a composition containing

| C: 0.050% to 0.090%, | Si: 0.05% or less, |
| Mn: 1.5% to 2.0%, | P: 0.030% or less, |
| S: 0.0050% or less, | Al: 0.005% to 0.1%, |
| N: 0.01% or less, | Ti: 0.005% to 0.050%, |
| Nb: 0.020% to 0.080%, | |

and optionally further containing Ca: 0.0001% to 0.0050%,
and the balance being Fe and incidental impurities, on a percent by mass basis,
the annealing step is specified to be a step having a maximum achieving temperature: 800°C to 900°C, two-step heating, and two-step cooling,
the two-step heating includes first-step heating to heat from 50°C to a first-step heating achieving temperature in a temperature range of (maximum achieving temperature-50°C) to (maximum achieving temperature - 10°C) at an average temperature raising rate: 0.5°C to 5.0°C/s and second-step heating, in which the temperature raising time from that temperature range to the maximum achieving temperature is specified to be 30 to 150 s,
the two-step cooling includes first-step cooling to cool from the maximum achieving temperature at a first-step cooling rate of an average cooling rate: 10°C to 40°C/s, and the following second-step cooling to cool to a cooling stop temperature in a temperature range of 400°C to 500°C at a cooling rate of an average cooling rate: (0.2 to 0.8) x first-step cooling rate for a cooling time of 0.2 to 0.8 times the total cooling time of the first-step cooling and the second-step cooling, and
after the second-step cooling is finished, staying is performed at a temperature range of 400°C to 500°C for 100 to 1,000 s.

**Patentansprüche**

**1.** Hochfestes kaltgewalztes Stahlblech mit ausgezeichneter Streckbördel-Verformbarkeit, umfassend:

eine Zusammensetzung enthaltend:

| C: 0.050% bis 0.090%, | Si: 0.05% oder weniger, |
| Mn: 1.5% bis 2.0%, | P: 0.030% oder weniger, |
| S: 0.0050% oder weniger, | Al: 0.005% bis 0.1%, |
| N: 0.01% oder weniger, | Ti: 0.005% bis 0.050%, |
| Nb: 0.020% to 0.080%, | |

und gegebenenfalls ferner enthaltend Ca: 0,0001% bis 0,0050%,
und wobei der Rest Fe und übliche Verunreinigungen sind, auf Masseprozentbasis, und
eine Mikrostruktur, die aus 50% bis 77% Ferritphase, mehr als 30% und 50% oder weniger Bainitphase, 2% bis 10% martensitischer Phase, 1% bis 5% Restaustenitphase und gegebenenfalls weniger als 3% Cementitphase besteht.

**2.** Verfahren zur Herstellung eines hochfesten kaltgewalzten Stahlblechs mit ausgezeichneter Streckbördel-Verformbarkeit, wobei das Verfahren Folgendes umfasst: Unterziehen eines Stahls einem Warmwalzschritt, einem Kaltwalzschritt und einem Glühschritt nacheinander, so dass ein kaltgewalztes Stahlblech hergestellt wird, wobei der Stahl als ein Stahl spezifiziert ist, der eine Zusammensetzung aufweist, enthaltend:

| C: 0.050% bis 0.090%, | Si: 0.05% oder weniger, |
| Mn: 1.5% bis 2.0%, | P: 0.030% oder weniger, |
| S: 0.0050% oder weniger, | Al: 0.005% bis 0.1%, |
| N: 0.01% oder weniger, | Ti: 0.005% bis 0.050%, |
| Nb: 0.020% to 0.080%, | |

und gegebenenfalls ferner enthaltend Ca: 0,0001% bis 0,0050%,
und wobei der Rest Fe und übliche Verunreinigungen sind, auf Masseprozentbasis,
der Glühschritt als ein Schritt mit einer maximalen Zieltemperatur von 800°C bis 900°C, einem zweistufigen Erwärmen und einem zweistufigen Abkühlen spezifiziert ist,
das zweistufige Erwärmen einen ersten Erwärmungsschritt zum Erwärmen von 50°C bis zu einer Erwärmungszieltemperatur des ersten Schritts in einem Temperaturbereich von (maximale Zieltemperatur - 50°C) bis (maximale Zieltemperatur - 10°C) bei einer durchschnittlichen Temperaturanstiegsgeschwindigkeit von 0,5°C bis 5,0°C/s und einen zweiten Erwärmungsschritt einschießt, in dem die Temperaturanstiegszeit von diesem Temperaturbereich bis zur maximalen Zieltemperatur als 30 bis 150 s spezifiziert ist,
das zweistufige Abkühlen einen ersten Abkühlschritt zum Abkühlen von der maximalen Zieltemperatur bei einer Abkühlgeschwindigkeit des ersten Abkühlschritts mit einer durchschnittlichen Abkühlgeschwindigkeit von 10°C bis 40°C/s und den folgenden zweiten Abkühlschritt zum Abkühlen auf eine Abkühlstopptemperatur in einem Temperaturbereich von 400°C bis 500°C bei einer Abkühlgeschwindigkeit mit einer durchschnittlichen Abkühlgeschwindigkeit von (0,2 bis 0,8) x Abkühlgeschwindigkeit des ersten Schritts für eine Abkühlzeit des 0,2- bis 0,8-fachen der gesamten Abkühlzeit des ersten Abkühlschritts und des zweiten Abkühlschritts einschließt, und nachdem der zweite Abkühlschritt beendet ist, ein Halten in einem Temperaturbereich von 400°C bis 500°C für 100 bis 1000 s durchgeführt wird.

## Revendications

1. Tôle d'acier laminée à froid de haute résistance présentant une excellente déformabilité de bordage par étirage, comprenant :

   une composition contenant

   C : 0,050 % à 0,090 %,
   Si : 0,05 % ou moins,
   Mn : 1,5 % à 2,0 %,
   P : 0,030 % ou moins,
   S : 0,0050 % ou moins,
   Al : 0,005 % à 0,1 %,
   N : 0,01 % ou moins,
   Ti : 0,005 % à 0, 050 %,
   Nb : 0,020 % à 0,080 %,

   et contenant en outre facultativement Ca : 0,0001 % à 0,0050 %,
   le reste étant du Fe et des impuretés éventuelles en pourcentage en masse , et
   une microstructure constituée de 50 % à 77 % d'une phase de ferrite, de plus de 30 % à 50 % ou moins d'une phase de bainite, de 2 % à 10 % d'une phase de martensite, de 1 % à 5 % d'une phase d'austénite résiduelle et éventuellement de moins de 3 % d'une phase de cémentite.

2. Procédé de fabrication d'une tôle d'acier laminée à froid de haute résistance présentant une excellente déformabilité de bordage par étirage, le procédé comprenant : la soumission d'un acier à une étape de laminage à chaud, à une étape de laminage à froid et à une étape de recuit de manière séquentielle, afin de produire une tôle d'acier laminée à froid, dans lequel l'acier est spécifié pour être un acier présentant une composition contenant

   C : 0, 050 % à 0,090 %,
   Si : 0,05 % ou moins,
   Mn : 1,5 % à 2,0 %,
   P : 0,030 % ou moins,
   S : 0,0050 % ou moins,
   Al : 0,005 % à 0,1 %,
   N : 0,01 % ou moins,
   Ti : 0,005 % à 0,050 %,
   Nb : 0,020 % à 0,080 %,

   et contenant en outre éventuellement Ca : 0,0001 % à 0,0050 %,

le reste étant du Fe et des impuretés éventuelles en pourcentage en masse ,

l'étape de recuit est spécifiée pour être une étape présentant une température opérationnelle maximale de 800 °C à 900 °C, un chauffage en deux étapes et un refroidissement en deux étapes,

le chauffage en deux étapes comprend un chauffage de première étape pour chauffer de 50 °C jusqu'à une température opérationnelle de chauffage de première étape située dans une plage de températures allant de (température opérationnelle maximale - 50 °C) à (température opérationnelle maximale - 10 °C) à un taux moyen d'augmentation de la température de 0,5 °C/s à 5,0 °C/s et un chauffage de seconde étape, dans lequel la durée d'augmentation de la température de cette plage de températures à la température opérationnelle maximale est spécifiée pour être de 30 s à 150 s,

le refroidissement en deux étapes comprend un refroidissement de première étape pour refroidir de la température opérationnelle maximale à un taux de refroidissement de première étape qui est un taux moyen de refroidissement de 10 °C/s à 40 °C/s, et le refroidissement suivant de seconde étape pour refroidir à une température d'arrêt de refroidissement située dans une plage de températures allant de 400 °C à 500 °C à un taux de refroidissement qui est un taux moyen de refroidissement égal à (0,2 à 0,8) x le taux de refroidissement de première étape pendant une durée de refroidissement de 0,2 à 0,8 fois la durée totale de refroidissement du refroidissement de première étape et du refroidissement de seconde étape, et,

à la fin du refroidissement de seconde étape, la température est maintenue dans une plage de températures allant de 400 °C à 500 °C pendant 100 s à 1000 s.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9041040 A
- JP 2006176807 A
- JP 2008297609 A
- JP 5078752 A
- JP 2010065316 A
- JP 2010255091 A
- JP 2010059452 A